# EUROPEAN PATENT APPLICATION

(11) **EP 4 810 992 A1**
(43) Date of publication of application: **23.09.2026**
(21) Application number: 26160658.6
(22) Date of filing: 25.02.2026
(51) Int. Cl.: G01S 7/52, G01S 7/524, G01S 7/527, G01S 7/539, G01S 7/62, G01S 15/10, G01S 15/18, G01S 15/42, G01S 15/96, G01S 3/80

(54) **FREQUENCY STEERED SONAR AND CONTROL METHOD FOR FREQUENCY STEERED SONAR**

(30) Priority: 18.03.2025 GB 202503916
(71) Applicant: Furuno Electric Company Limited, Nishinomiya-City, Hyogo 662-8580 (JP)
(72) Inventor: Iwata, Kohei, Nishinomiya-city, 662-8580 (JP)
(74) Representative: Cleveland Scott York

(57) **Abstract**

A frequency steered sonar (1) includes a transducer (10) configured to transmit underwater an ultrasonic transmission wave comprising a plurality of frequencies (fl-fm), each frequency of the plurality of frequencies being associated with a transmission direction, to receive a reflection wave from the transmission wave reflected on an underwater object, and to generate a reception signal from the reflection wave; and a filter (11a) configured to filter the reception signal in each transmission direction, a first time range (ΔT1) of the filtered reception signal being outputted from the filter by attenuating signal components having a frequency outside of a first bandwidth (Δf4), and a second time range (ΔT2) of the filtered reception signal being outputted from the filter by attenuating signal components having a frequency outside of a second bandwidth (Δf3), and to output the filtered reception signal for display or storage.

## Description

The present disclosure relates to a frequency steered sonar for detecting an object using frequency steered beamforming, and a control method for frequency steered sonar.

Conventionally, a technique for detecting an object in water is known by transmitting transmission waves of different frequencies in each angular direction (for example, azimuth). Generally, such a technique is referred to as "frequency steered beamforming" or "frequency controlled beamforming". An example of frequency steered sonar using frequency steered beamforming is described, for example, in WO2021/019858A1.

In a frequency steered sonar, each direction (for example, azimuth) changing in the angular direction is associated with a frequency in advance. Therefore, if the frequency of an echo signal is extracted in reception processing, an arrival direction of the echo signal may be known. Thus, the echo signal in each direction may be obtained, and a two-dimensional echo image may be generated as a result of underwater detection.

Extraction of the frequency of the echo signal may be performed, for example, by bandpass filter processing or Fourier transform/inverse Fourier transform processing. In these cases, a resolution of the echo image changes depending on a bandwidth limitation in these processing. For example, if the bandwidth is narrowed, the resolution in the angular direction increases, but a distance resolution decreases. On the other hand, if the bandwidth is increased, the resolution in the angular direction decreases, but the distance resolution increases. Moreover, since a reception beam spreads as distance increases, the image of the object spreads laterally (i.e., in the angular direction) as the object is farther away.

In view of such problems, it is an object of the present disclosure to provide a frequency steered sonar capable of generating an echo image in which the resolution in the angular direction and the distance resolution are balanced, and to provide a method for controlling the frequency steered beamforming.

A first aspect of the present disclosure relates to a frequency steered sonar including a transducer and a filter. The transducer is configured to transmit underwater an ultrasonic transmission wave including a plurality of frequencies, each frequency of the plurality of frequencies being associated with a transmission direction, to receive a reflection wave from the transmission wave reflected on an underwater object, and to generate a reception signal from the reflection wave. The filter is configured to filter the reception signal in each transmission direction, a first time range of the filtered reception signal being outputted from the filter by attenuating signal components having a frequency outside of a first bandwidth, and a second time range of the filtered reception signal being outputted from the filter by attenuating signal components having a frequency outside of a second bandwidth, and to output the filtered reception signal for display or storage.

According to this configuration, it is possible to change a filtering bandwidth in the first time range and the second time range. Therefore, angular resolution and distance resolution may be adjusted for each time range, and an echo image in which angular resolution and distance resolution are balanced may be generated.

In an embodiment, the first bandwidth may be wider than the second bandwidth, and the first time range may be earlier than the second time range.

According to this configuration, the closer the distance, the higher the distance resolution and the lower the angular resolution. As a result, an echo image of an object at a short distance may be generated satisfactorily and unnatural connection of echoes in the echo image may be suppressed.

In an embodiment, the filter may be configured to convert the reception signal into the frequency domain as a frequency converted signal, to extract the first bandwidth from the frequency converted signal as a first extracted signal, to extract the second bandwidth from the frequency converted signal as a second extracted signal, to convert the first extracted signal and the second extracted signal into the time domain as a first time converted signal and a second time converted signal respectively, to generate the first time range of the filtered reception signal by extracting the first time range of the first time converted signal, and to generate the second time range of the filtered reception signal by extracting the second time range of the second time converted signal.

According to this configuration, Fourier transform/inverse Fourier transform may be used to perform filtering with different band limitations for each time range.

In an embodiment, the filter may be configured to filter the reception signal with a first bandpass filter having a bandwidth set to the first bandwidth and output a first bandpass filtered signal, to filter the reception signal with a second bandpass filter having a bandwidth set to the second bandwidth and output a second bandpass filtered signal, to generate the first time range of the filtered reception signal by extracting the first time range of the first bandpass filtered signal, and to generate the second time range of the filtered reception signal by extracting the second time range of the second bandpass filtered signal.

According to this configuration, a plurality of bandpass filters may be used to perform filtering with different band limitations for each time range.

In an embodiment, the filter may be configured to concatenate the first time range of the filtered reception signal and the second time range of the filtered reception signal.

According to this configuration, a series of reception signals with different band limitations for each time range may be obtained.

In an embodiment, the filter may be configured to smooth the filtered reception signal at a concatenation point between the first time range and the second time range.

According to this configuration, it is possible to suppress occurrence of a step in the reception signal before and after the concatenation point, and to generate a smoothed echo image.

In an embodiment, the filter may be configured to filter the reception signal centered on a first frequency associated with a first transmission direction and filter the reception signal centered on a second frequency associated with a second transmission direction, the first frequency and the second frequency being within the plurality of frequencies transmitted by the transducer.

According to this configuration, a center of the bandwidth applied to each time range is aligned with the frequency corresponding to the transmission direction. Therefore, the filtering in each time range may be performed with respect to the corresponding transmission direction without fluctuation, and the reception signal in each transmission direction may be obtained with high quality.

A second aspect of the present disclosure relates to a control method for a frequency steered sonar. The method includes transmitting underwater with a transducer an ultrasonic transmission wave including a plurality of frequencies, each frequency of the plurality of frequencies being associated with a transmission direction; filtering a reception signal generated from the transducer receiving a reflection wave from the transmission wave reflected on an underwater object; and outputting the filtered reception signal for display or storage. The filtering includes filtering the reception signal in each transmission direction, so that signal components having a frequency outside of a first bandwidth are attenuated in a first time range of the filtered reception signal and signal components having a frequency outside of a second bandwidth are attenuated in a second time range of the filtered reception signal.

A third aspect of the present disclosure relates to a computer program including instructions which, when the program is executed by a computer, cause the computer to carry out the method of the second aspect.

A fourth aspect of the present disclosure relates to a non-transitory computer-readable medium having stored thereon computer-executable instructions which, when executed by a computer, cause the computer to transmit underwater with a transducer an ultrasonic transmission wave including a plurality of frequencies, each frequency of the plurality of frequencies being associated with a transmission direction; to filter a reception signal generated from the transducer receiving a reflection wave from the transmission wave reflected on an underwater object; and to output the filtered reception signal for display or storage. The filtering includes filtering the reception signal in each transmission direction, so that signal components having a frequency outside of a first bandwidth are attenuated in a first time range of the filtered reception signal and signal components having a frequency outside of a second bandwidth are attenuated in a second time range of the filtered reception signal.

According to the second, third and fourth aspects, the same effect as the first aspect may be achieved. Features of one aspect may be used with any other aspect. Any of the apparatus features may be provided as method features and vice versa.

As described above, according to the present disclosure, it is possible to provide a frequency steered sonar capable of generating an echo image with balanced azimuth resolution and distance resolution, and a control method for the frequency steered sonar.

The effect and significance of the present disclosure will be further clarified by the description of the following embodiments. However, the following embodiments are merely exemplary embodiments of the present disclosure, and the present disclosure is not limited in any way to those described in the following embodiments.
FIG. 1 is a diagram schematically showing a transmission state of a transmission wave according to an embodiment.
FIG. 2 is a diagram showing a configuration of a sonar according to an embodiment.
FIG. 3 is a flowchart showing a display processing of an echo image according to an embodiment.
FIG. 4 is a view showing an example of an echo image according to a comparative example.
FIG. 5A is a diagram showing an example of association between azimuth direction and frequency in a frequency steered beamforming according to an embodiment.
FIG. 5B is a diagram showing a relationship between a width of a transmission wave included in a given angular width and distance according to an embodiment.
FIG. 6 is a table showing a relationship between angular width in azimuth direction, distance and width of a transmission wave according to an embodiment.
FIG. 7 is a flowchart showing a processing for generating reception signal in each direction according to an embodiment.
FIG. 8 is a diagram showing an example of a frequency spectrum of a reception signal after Fourier transform according to an embodiment.
FIG. 9A and FIG. 9B are diagrams showing IFFT signals obtained by applying inverse Fourier transform to frequency components extracted from a frequency spectrum of a reception signal for different bandwidths according to an embodiment.
FIG. 10A and FIG. 10B are diagrams showing IFFT signals obtained by applying inverse Fourier transform to frequency components extracted from a frequency spectrum of a reception signal for different bandwidths according to an embodiment.
FIG. 11 is a diagram showing a reception signal from a targeted direction generated by a filter according to an embodiment.
FIG. 12 is a view showing an example of an echo image according to an embodiment.
FIG. 13 is a diagram showing a functional block of the filter according to an embodiment.
FIG. 14 is a diagram showing another functional block of the filter according to an embodiment.

The functionality of the elements disclosed herein may be implemented using circuitry or processing circuitry which includes general purpose processors, special purpose processors, integrated circuits, ASICs (i.e., Application Specific Integrated Circuits), conventional circuitry and/or combinations thereof which are configured or programmed to perform the disclosed functionality. Processors are considered processing circuitry or circuitry as they include transistors and other circuitry therein.

In the disclosure, the circuitry, units, or means are hardware that carry out or are programmed to perform the recited functionality. The hardware may be any hardware disclosed herein or otherwise known which is programmed or configured to carry out the recited functionality.

When the hardware is a processor which may be considered a type of circuitry, the circuitry, means, or units are a combination of hardware and software, the software being used to configure the hardware and/or processor.

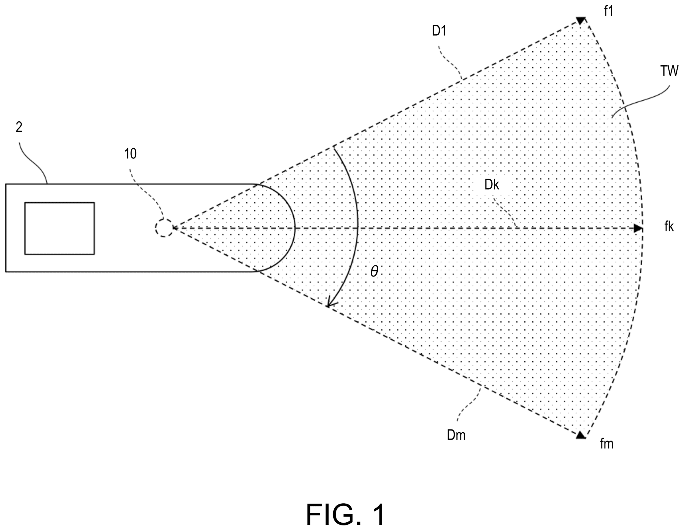

FIG. 1 is a schematic diagram of a transmission state of a transmission wave TW.

A transducer 10 may be installed on a bottom of a ship 2. The transducer 10 transmits a transmission wave TW into water at a given period. The transducer 10 receives a reflection wave of the transmission wave TW and outputs a reception signal according to an intensity of the reflection wave. The transmission wave TW has a given width in direction of azimuth angle θ and has a given width in direction of depression angle. The transmission wave TW is an ultrasonic wave.

The transmission wave TW has a plurality of frequencies each associated with azimuth direction. Frequencies f1, fk and fm are each associated with azimuth direction D1, Dk and Dm, and in directions in between D1, Dk and Dm, frequencies different from frequencies in other azimuth directions are also associated with each direction. Transmission waves having different frequencies for each azimuth direction are generated by, for example, the method described in WO2021/019858A1. However, it is not limited to this method, and transmission waves having different frequencies in each azimuth direction may be generated by other methods. In the transducer 10, a reception element having sensitivity to frequencies f1 to fm is arranged.

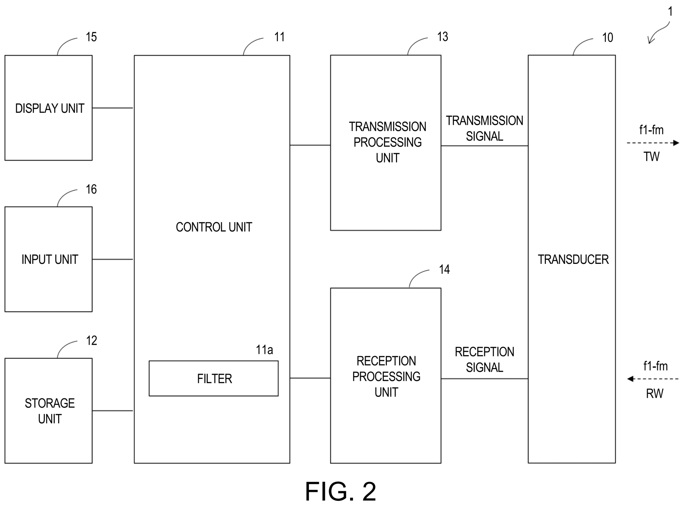

FIG. 2 is a diagram showing a configuration of frequency steered sonar 1 (hereinafter referred to as sonar 1) according to an embodiment.

In addition to the transducer 10 described above, the sonar 1 may include a control unit 11 (which may also be referred to as processing circuitry 11), a storage unit 12 (which may also be referred to as a memory 12), a transmission processing unit 13 (which may also be referred to as transmission processing circuitry 13), a reception processing unit 14 (which may also be referred to as reception processing circuitry 14), a display unit 15 (which may also be referred to as a display 15), and an input unit 16 (which may also be referred to as an interface 16).

The control unit 11 may include arithmetic processing circuitry such as a CPU (i.e., Central Processing Unit) and control each unit according to a program stored in the storage unit 12. By this program, the control unit 11 may execute the function of filter 11a described later. The control unit 11 may be composed of an integrated circuit such as a field-programmable gate array (i.e., FPGA). The storage unit 12 includes a storage medium such as ROM (i.e., Read Only Memory) or RAM (i.e., Random Access Memory) and stores the program. The storage unit 12 may also be used as a work area for controlling the control unit 11. The storage unit 12 stores the reception signal for displaying an echo image.

According to a control from the control unit 11, the transmission processing unit 13 makes the transducer 10 transmit the transmission wave TW whose frequency is different for each direction. The transducer 10 receives a reflection wave RW of the transmission wave TW and outputs the reception signal. The reception signal includes signal components of various frequencies included in the transmission wave TW. The reception processing unit 14 may perform processing such as amplification and noise removal of the reception signal inputted from the transducer 10. The control unit 11 may perform A/D conversion of the reception signal processed by the reception processing unit 14 and perform echo image generation processing.

The control unit 11 extracts signal components of frequencies corresponding to each azimuth direction from the reception signal inputted from the reception processing unit 14 by the function of the filter 11a and acquires the extracted signal components as reception signal in each azimuth direction. The function of the filter 11a attenuates signal components of frequencies outside of a bandwidth corresponding to each azimuth direction and extracts signal components of the bandwidth corresponding to each azimuth direction. The control unit 11 stores the reception signal in each azimuth direction in the storage unit 12 for displaying the echo image. The control unit 11 may generate image data of the echo image in which an echo intensity is distributed 2-dimensionally in the azimuth direction from the reception signal in each azimuth direction generated in one transmission (i.e., 1 ping). The control unit 11 may output the generated image data to the display unit 15.

The display unit 15 comprises a monitor or the like and displays the echo image according to the image data inputted from the control unit 11. The input unit 16 may receive a command input related to the display of the echo image from a user. The input unit 16 may include an interface such as a trackball and output input information to the control unit 11. The input unit 16 may be a transparent touch pad superimposed on the display unit 15.

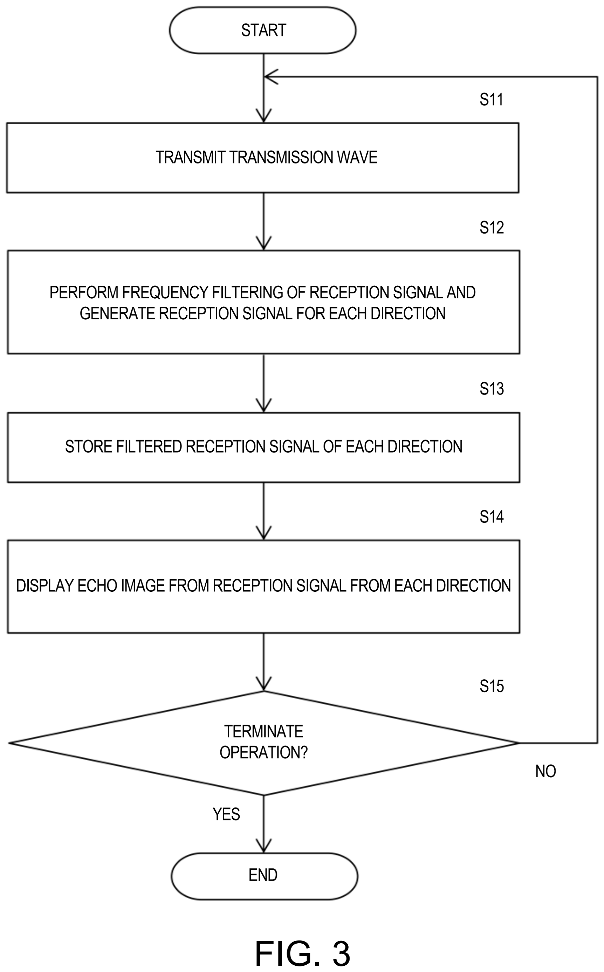

FIG. 3 is a flowchart showing a display processing of the echo image.

The control unit 11 makes the transducer 10 transmit 1 ping of the transmission wave TW at step S11. The control unit 11 performs frequency filtering of the reception signal outputted from the transducer 10 in response to the transmission and generates a reception signal for each direction at step S12. The processing of step S12 is performed by the function of the filter 11a. The control unit 11 stores the filtered reception signal of each direction in the storage unit 12 at step S13. The control unit 11 generates the image data of the echo image from the reception signal for each direction and displays the echo image on the display unit 15 at step S14.

The control unit 11 determines whether an input for terminating the display operation of the echo image has been received from the user at step S15. The control unit 11 repeatedly executes the processes of steps S11 to S14 until the input for terminating the display operation of the echo image is received from the user (S15: NO). Thus, the echo image displayed on the display unit 15 is updated every ping. When the input for terminating the display operation is received thereafter (S15: YES), the control unit 11 terminates the process of FIG. 3.

Incidentally, in the process of FIG. 3, a resolution of the echo image changes depending on a bandwidth limitation in the filtering step S12. For example, if the bandwidth is narrowed, the resolution in the azimuth direction increases but the distance resolution decreases. Conversely, if the bandwidth is widened, the resolution in the azimuth direction decreases but the distance resolution increases. Moreover, since a reception beam spreads as distance increases, the image of an object spreads laterally (i.e., in the angular direction) as the object is farther away. Therefore, in order to maintain the azimuth resolution at long distance, the bandwidth of the bandwidth limitation in the filtering at step 12 is usually set relatively narrow.

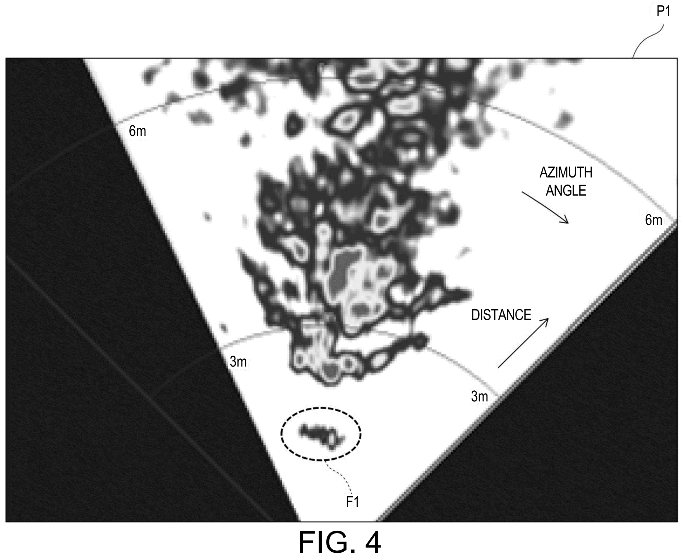

FIG. 4 is a diagram showing an example of an echo image P1 when the bandwidth of the bandwidth limitation in the frequency filtering is narrowed in order to maintain the azimuth resolution at long distance. The actual echo image P1 is colored according to echo intensity, but for convenience, the echo image P1 is shown in grayscale in FIG. 4.

As shown in FIG. 4, when the bandwidth of the bandwidth limitation in the frequency filtering is narrowed, the echo image of a long-distance fish is displayed with natural connection. However, an echo image F1 of a short-distance fish surrounded by a dashed line has unnatural connection because the resolution in the azimuth direction and the distance direction are not appropriate.

Therefore, in an embodiment, the filtering step S12 (i.e., filter 11a) of FIG. 3 is adjusted so that unnatural connection does not occur in the echo image both at long distance and at short distance. Specifically, by changing the bandwidth of the filtering according to the distance, an echo image with a balance between the resolution in the azimuth direction and the resolution in the distance direction is generated. A specific method of adjusting the bandwidth is described below.

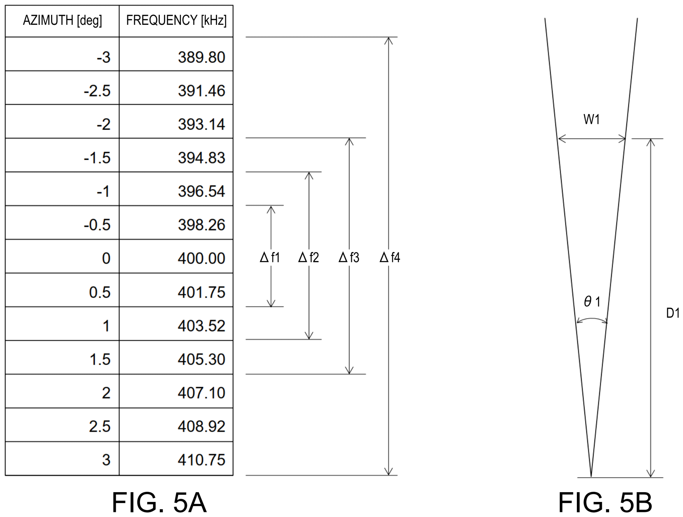

FIG. 5A is a diagram showing an example of association between the azimuth direction and frequency in a frequency steered beamforming.

In the example of FIG. 5A, a bandwidth Δf1 of the frequency in an azimuth angle range of 1 degree is about 4 kHz, and a bandwidth Δf2 of the frequency in the azimuth angle range of 2 degrees is about 7 kHz. A bandwidth Δf3 of the frequency in the azimuth angle range of 3 degrees is about 10 kHz, and the bandwidth Δf4 of the frequency in the azimuth angle range of 6 degrees is about 20 kHz. Here, the transmission wave TW spreads as the distance from the transducer 10 increases. Therefore, as shown in FIG. 5B, when an angle width is θ1, a width W1 of the transmission wave included in the angle width θ1 increases as distance D1 increases.

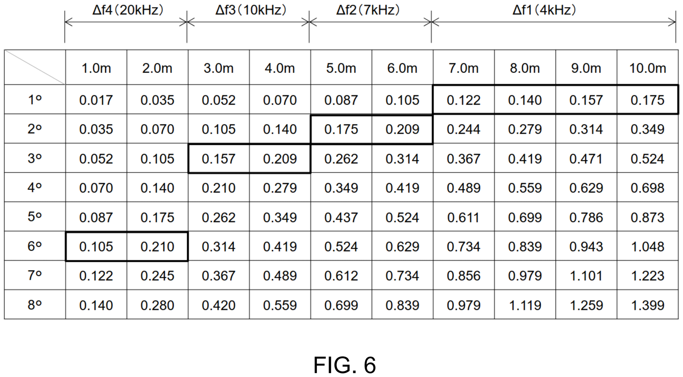

FIG. 6 is a table showing a relationship between the angle width θ1 in the azimuth direction, the distance D1, and the width W1 when the azimuth direction and the frequency are related as shown in FIG. 5A.

In the table of FIG. 6, the top row indicates the distance D1, and the leftmost column indicates the angle width θ1. The width W1 (unit: meters), when the distance D1 and the angle width θ1 between rows and columns are set, is shown in cells where the rows and columns intersect.

In an embodiment, the angle width θ1 is associated with a range of the distance D1 so that the width W1 is within a range of 10~20 cm. That is, as shown by bold frames in the table of FIG. 6, the angle width of 6° is associated with the distance range of 0~2 m, the angle width of 3° is associated with the distance range of 2 m~4 m, the angle width of 2° is associated with the distance range of 4 m~6 m, and the angle width of 1° is associated with the distance range of 6 m∼10 m.

Here, as shown in FIG. 5A, the bandwidth Δf4 of the frequency in the range of the angle width of 6° is about 20 kHz. Therefore, at step S12 of FIG. 3, a filtering with the bandwidth Δf4 (i.e., 20 kHz) is applied to a time range of the reception signal corresponding to the distance range of 0~2 m. Also, as shown in FIG. 5A, the bandwidth Δf3 of the frequency in the range of the angle width of 3° is about 10 kHz. Therefore, at step S12 of FIG. 3, a filtering with the bandwidth Δf3 (i.e., 10 kHz) is applied to the time range of the reception signal corresponding to the distance range of 2 m~4 m.

Similarly, a filtering with the bandwidth Δf2 (i.e., 7 kHz) is applied to the time range of the reception signal corresponding to the distance range of 4 m~6 m, and a filtering with the bandwidth Δf1 (i.e., 4 kHz) is applied to the time range of the reception signal corresponding to the distance range of 6 m~10 m. When a detection distance range is 10 m or more, a filtering with the bandwidth Δf1 (i.e., 4 kHz) may also be applied to the distance range of 10 m or more.

By changing the filtering bandwidth according to the distance range (i.e., time range) in this way, the resolution in the azimuth direction (i.e., width W1) may be within the range of 10~20 cm in all the distance ranges.

Next, methods for generating the reception signal of each direction after filtering by changing the filtering bandwidth according to the distance range (i.e., time range) as described above are described.

### Filtering Method 1

In filtering method 1, the filtering bandwidth is changed according to the distance range (i.e., time range) by using Fourier transform/inverse Fourier transform processing.

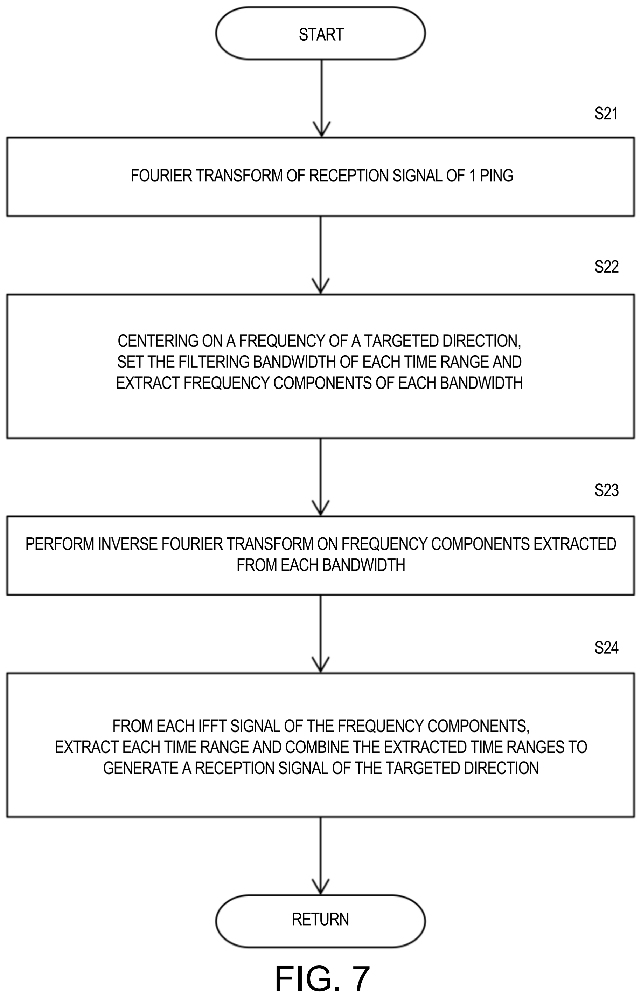

FIG. 7 is a flowchart showing a processing for generating the reception signal in each direction.

The processing shown in FIG. 7 is executed by the control unit 11 at step S12 of FIG. 3 by the function of the filter 11a. The control unit 11 executes the processing of steps S22 to S24 of FIG. 7 for each direction in which the reception signal is to be generated.

The control unit 11 performs Fourier transform of the reception signal of 1 ping inputted from the reception processing unit 14 and calculates a frequency spectrum of the reception signal distributed along a frequency axis at step S21. The control unit 11 sets the filtering bandwidth applied to each time range (i.e., distance range) described above, centering on the frequency of the direction (i.e., targeted direction) for which the reception signal is to be generated and extracts frequency components (i.e., signal components) of each bandwidth at step S22. Here, the targeted direction is set in a detection range of the azimuth angle θ with a given angular resolution.

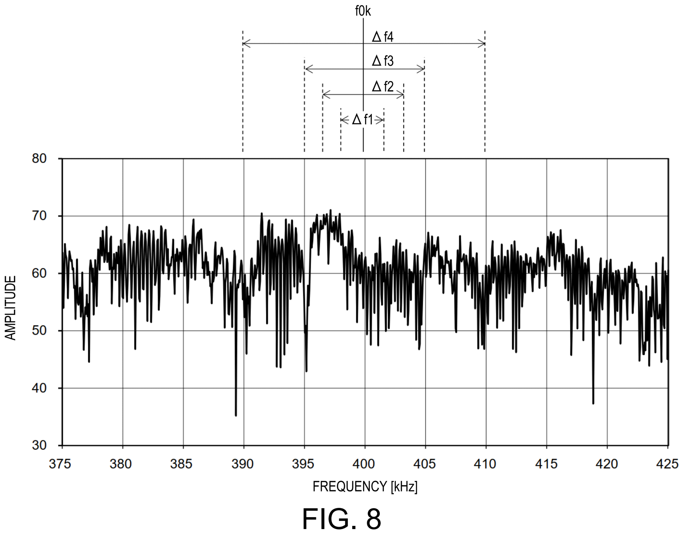

FIG. 8 is a diagram showing an example of the frequency spectrum of the reception signal after Fourier transform.

In this example, frequency f0k associated with one targeted direction is 400 kHz. At step S22 of FIG. 7, the control unit 11 sets the bandwidth to the ranges of the above-described bandwidths Δf1 (i.e., 4 kHz), Δf2 (i.e., 7 kHz), Δf3 (i.e., 10 kHz), and Δf4 (i.e., 20 kHz) around the frequency f0k and extracts the frequency components of these ranges. The control unit 11 executes this process for each targeted direction.

Referring back to FIG. 7, the control unit 11 performs an inverse Fourier transform on the frequency components extracted for each bandwidth and calculates a signal (i.e., IFFT signal) distributed along a time axis at step S23. The control unit 11 extracts a signal portion of the above-described time ranges (i.e., distance ranges) to which each bandwidth is applied from each IFFT signal of the frequency components and combines the extracted signal portions to generate a reception signal of the targeted direction at step S24. The control unit 11 executes this process for each targeted direction.

In the example of FIG. 6, the signal portion of a time range ΔT1 corresponding to the distance range of 0 m~2 m is extracted from the IFFT signal of the frequency components extracted for the bandwidth Δf4 (i.e., 20 kHz) and the signal portion of a time range ΔT2 corresponding to the distance range of 2 m~4 m is extracted from the IFFT signal of the frequency components extracted for the bandwidth Δf3 (i.e., 10 kHz). In addition, the signal portion of a time range ΔT3 corresponding to the distance range of 4 m~6 m is extracted from the IFFT signal of the frequency components extracted for the bandwidth Δf2 (i.e., 7 kHz) and the signal portion of a time range ΔT4 corresponding to the distance range of 7 m∼10 m is extracted from the IFFT signal of the frequency components extracted for the bandwidth Δf1 (i.e., 4 kHz).

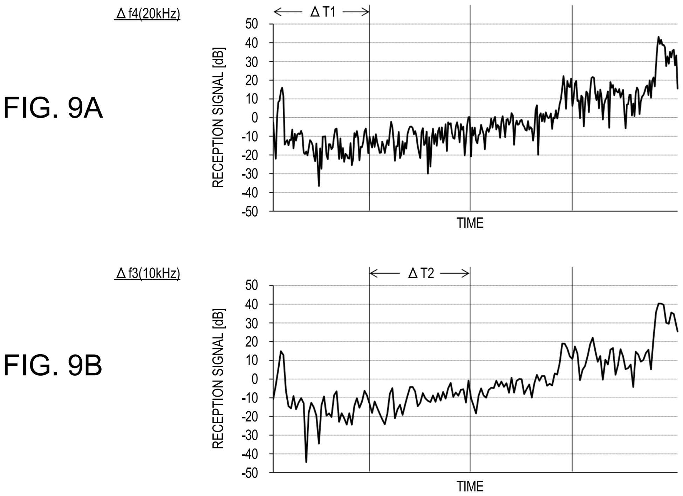

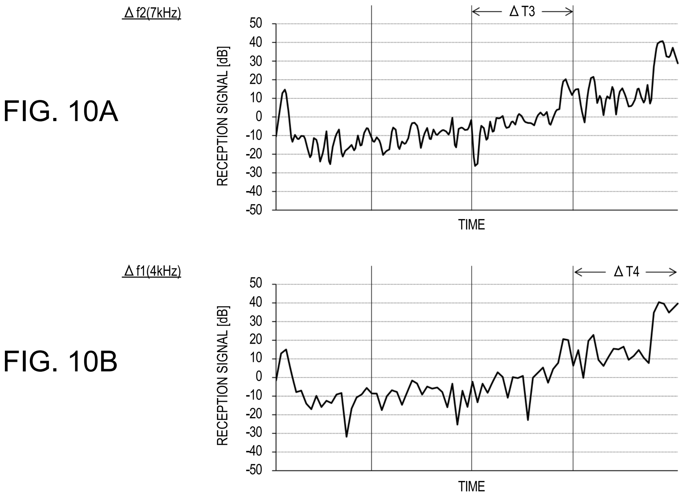

FIG. 9A and FIG. 9B are diagrams showing the IFFT signals obtained by applying the inverse Fourier transform to the frequency components extracted for the bandwidths Δf4 (i.e., 20 kHz) and Δf3 (i.e., 10 kHz), respectively. FIG. 10A and FIG. 10B are diagrams showing the IFFT signals obtained by applying the inverse Fourier transform to the frequency components extracted for the bandwidths Δf2 (i.e., 7 kHz) and Δf1 (i.e., 4 kHz), respectively.

The IFFT signals of FIGs. 9A to 10B are obtained at step S23 of FIG. 7. At step S24 of FIG. 7, the control unit 11 extracts the signal portions in the time ranges ΔT1, ΔT2, ΔT3, and ΔT4 from the IFFT signals of FIGs. 9A to 10B and concatenates the extracted signal portions on the time axis to generate the reception signal for the targeted direction.

Here, at a boundary of adjacent signal portions on the time axis, an intensity of these signal portions may deviate. Therefore, the control unit 11 may perform a process of smoothing the reception signal after the concatenation at concatenation points of adjacent time ranges.

For example, in this smoothing process, the control unit 11 may refer to sample values Sᵢ and Sᵢ₋₁ at the end of a signal portion extracted for a time range ΔTk and to sample values Sᵢ₊₁ and Sᵢ₊₂ at the beginning of a signal portion extracted for a time range ΔTk+1. Then, the control unit 11 may calculate sample value Sᵢ*'* at the end of the signal portion of the time range ΔTk and sample value Sᵢ₊₁*'* at the beginning of the signal portion of the time range ΔTk+1 from the following equation and replace the sample values Sᵢ and Sᵢ₊₁ with the sample values Si*'* and Sᵢ₊₁*'*.${s}_{i} ′ = \left({s}_{i - 1}+{s}_{i}+{s}_{i + 1}\right) / 3$ ${s}_{i + 1} ′ = \left({s}_{i}+{s}_{i + 1}+{s}_{i + 2}\right) / 3$ As a result, the reception signal after concatenation changes smoothly at the boundary between the time range ΔTk and the time range ΔTk+1 and a smoothed echo image with no discomfort for the user may be generated from the reception signal after concatenation. However, the smoothing method is not limited to this, and other smoothing methods capable of smoothly changing the reception signal at the concatenation point may be used.

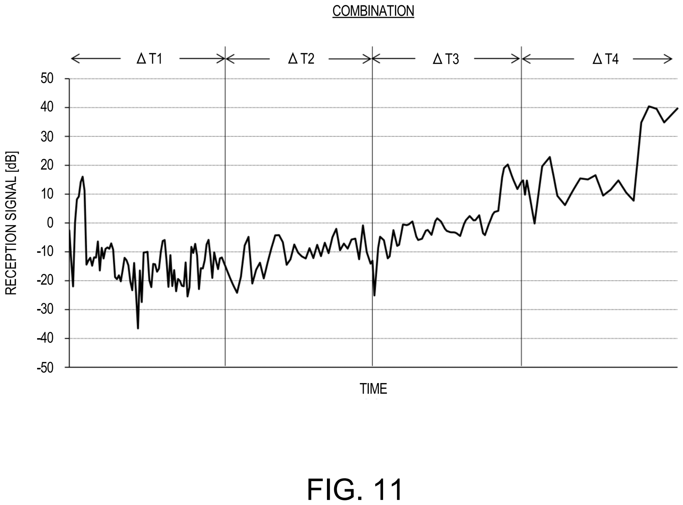

FIG. 11 is a diagram showing the reception signal of the targeted direction generated from the IFFT signals of FIGs. 9A to 10B.

As shown in FIG. 11, the frequency components included in the targeted direction of the reception signal in the respective time ranges ΔT1 to ΔT4 differ according to the bandwidth limitations of the bandwidths Δf1 to Δf4. Furthermore, the concatenation points of the reception signal are smoothed by the smoothing process described above.

The control unit 11 executes the processing of steps S22 to S24 of FIG. 7 for each targeted direction to generate the reception signals of the respective targeted directions. Then, the control unit 11 generates the echo image whose echo intensity is distributed in a two-dimensional manner from the reception signals of the respective directions and displays the generated echo image on the display unit 15. The echo image is colored according to the echo intensity.

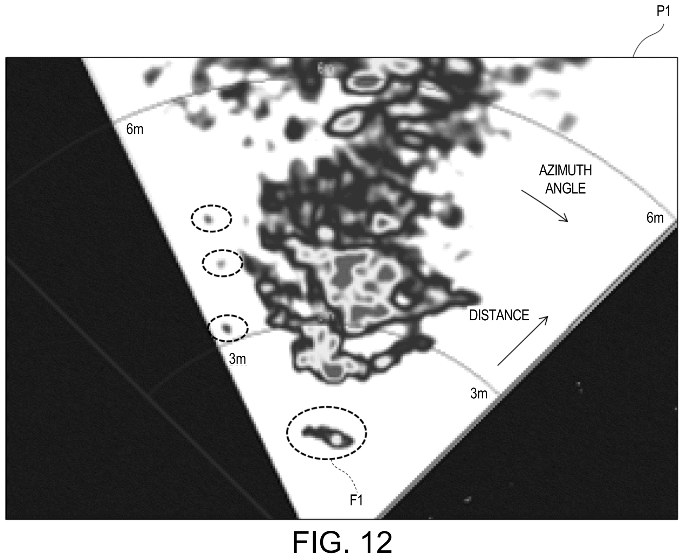

FIG. 12 shows the example of the echo image P1 generated using the reception signals of the respective directions generated by the processing of FIG. 7.

In the echo image P1 of FIG. 12, compared with the echo image P1 of FIG. 4 (i.e., comparative example), in particular, the image in the range of a short distance is improved to be a more natural image. For example, the echo image F1 of the short distance fish does not have the unnatural connection shown in FIG. 4, and the echo image F1 is displayed with a smooth shape corresponding to a shape of the fish. In addition, in the echo image P1 of FIG. 12, compared with the echo image P1 of FIG. 4 (i.e., comparative example), echo images enclosed with dashed circles in an intermediate distance range are more clearly displayed, and the image in the intermediate distance is also improved. Thus, by generating the reception signal in each direction by the process shown in FIG. 7, an echo image in which resolution in the azimuth direction and resolution in the distance direction are balanced may be generated, and the quality of the echo image may be enhanced.

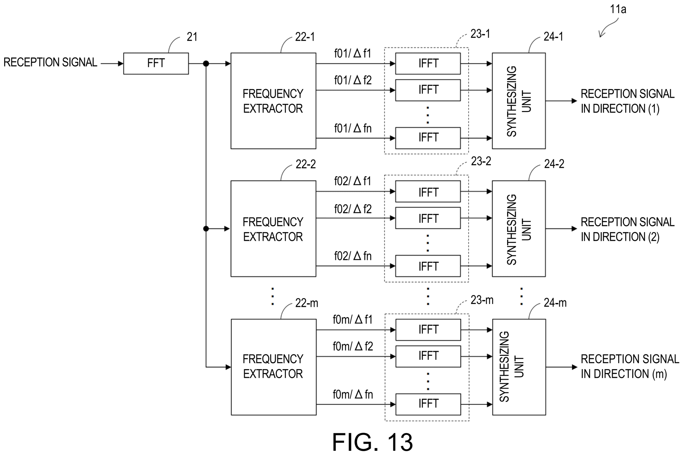

FIG. 13 is a diagram showing a functional block of the filter 11a for implementing the process shown in FIG. 7.

In FIGs. 8 to 11, four bandwidths Δf1 to Δf4 are set for bandwidth limitation, but in an embodiment shown in FIG. 13, n bandwidths (i.e., Δf1 to Δfn) are assumed, and n time ranges (i.e., ΔT1 to ΔTn) corresponding to the respective bandwidths are assumed.

An FFT unit 21 may perform Fourier transform of the reception signal inputted from the reception processing unit 14 to convert the reception signal into the frequency domain as a frequency converted signal. This process corresponds to step S21 in FIG. 7. Frequency extractors 22-1-22-m may set the bandwidths Δf1 to Δfn centering on frequencies f01 to f0m corresponding to directions (1) to (m), which are the targeted directions, respectively, and extract the frequency components corresponding to these bandwidths Δf1 to Δfn from the frequency spectrum resulting from the Fourier transform, i.e., from the frequency converted signal. This process corresponds to step S22 in FIG. 7.

IFFT units 23-1-23-m may apply an inverse Fourier transform to the respective frequency components extracted by the frequency extractors 22-1-22-m to generate the IFFT signals corresponding to the respective frequency components. As a result, the extracted signals of step S22 are converted back to the time domain as time converted signals. This process corresponds to step S23 in FIG. 7. Synthesizing units 24-1-24-m may extract the signal portions in the time ranges ΔT1 to ΔTn from the IFFT signals corresponding to the bandwidths Δf1 to Δfn and concatenate the extracted signal portions to generate the reception signals of the respective targeted directions. Moreover, the synthesizing units 24-1-24-m may perform the smoothing process described above at the concatenation points of the signal portions. The synthesizing units 24-1-24-m correspond to step S24 in FIG. 7.

### Filtering Method 2

In filtering method 2, the filtering bandwidth is changed according to the distance range (i.e., time range) by using a plurality of bandpass filters.

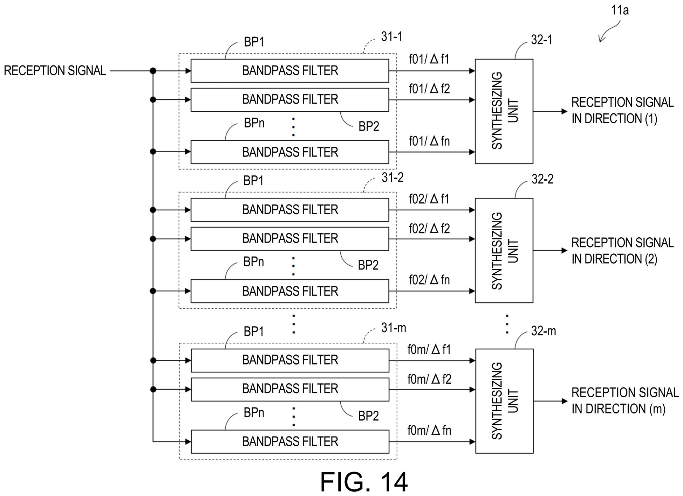

FIG. 14 is a diagram showing another functional block of the filter 11a for implementing the process shown in FIG. 7 by the filtering method 2.

Each of bandpass filter groups 31-1-31-m may have n bandpass filters BP1-BPn. The bandpass filters BP1-BPn of the bandpass filter group 31-k may extract signal components having a bandwidth Δf1∼Δfn centered on the frequency corresponding to the azimuth (k) from the reception signal inputted from the reception processing unit 14. The signal components extracted by the bandpass filter groups 31-1~31-m correspond to the IFFT signals calculated by the IFFT units 23-1-23-m in FIG. 13, respectively. The processing in synthesizing units 32-1-32-m may be the same as in the synthesizing unit 24-1-24-m in FIG. 13. Thus, the reception signal of each azimuth is generated.

Functional blocks shown in FIGs. 13 and 14 are realized as functions of the filter 11a executed by the control unit 11 by a program stored in the storage unit 12. However, part or all of the functional blocks of the filter 11a may be realized by hardware.

According to a configuration, at step S12 of FIG. 3, the filter 11a filters the reception signal in each azimuth direction (i.e., transmission direction). The time range ΔT1 (i.e., first time range) of the filtered reception signal is outputted from the filter 11a by attenuating signal components having a frequency outside of the bandwidth Δf4 (i.e., first bandwidth), and the time range ΔT2 (i.e., second time range) of the filtered reception signal is outputted from the filter 11a by attenuating signal components having a frequency outside of the bandwidth Δf3 (i.e., second bandwidth). The filter 11a outputs the filtered reception signal for display at step S14 or for storage at step S13.

Thus, the filtering bandwidth is changed in the time range ΔT1 (i.e., first time range) and the time range ΔT2 (i.e., second time range). Therefore, the resolution in the azimuth direction and the resolution in the distance direction may be adjusted for each time range, and an echo image P1 in which the resolution in the azimuth direction and the resolution in the distance direction are balanced may be generated.

The present disclosure is not limited to the above-described embodiments. The embodiments of the present disclosure may be modified in various ways other than the above-described configurations.

For example, in the above-described embodiments, a transmission wave TW having different frequencies in the azimuth direction is transmitted, but the direction in which the frequency changes in the transmission wave TW is not limited to the azimuth direction. For example, a transmission wave having different frequencies in the depression direction may be transmitted. In this case, echo data distributed two-dimensionally in the depression direction is generated by the same processing as in the above-described embodiments.

In addition, a plurality of reception elements of the transducer may be arranged in the vertical direction, and phase shift beamforming may be further performed in the vertical direction. In this case, for example, the same processing as in the above-described embodiments is performed for each reception element to generate a reception signal for each azimuth direction, and phase shift beamforming is performed for the reception signals of the same azimuth direction generated for the plurality of reception elements to generate reception signals at a plurality of depression angles for each azimuth direction. Thus, echo data distributed three-dimensionally may be generated.

The association between the azimuth direction (i.e., transmission direction) and the frequency shown in the above embodiments is an example, and the azimuth direction (i.e., transmission direction) and the frequency may be associated in a manner different from the example of the above embodiments. The bandwidth and the time range for band limitation shown in the above embodiments are also an example, and other bandwidth and time range that can well adjust the balance between the resolution in the azimuth direction and the resolution in the distance direction may be used.

## Claims

1. A frequency steered sonar (1), comprising:
a transducer (10) configured to:
transmit underwater an ultrasonic transmission wave (TW) comprising a plurality of frequencies (f1-fm), each frequency (fk) of the plurality of frequencies (f1-fm) being associated with a transmission direction (Dk),
receive a reflection wave (RW) from the transmission wave (TW) reflected on an underwater object, and
generate a reception signal from the reflection wave (RW); and
a filter (11a) configured to:
filter the reception signal in each transmission direction, a first time range (ΔT1) of the filtered reception signal being outputted from the filter (11a) by attenuating signal components having a frequency outside of a first bandwidth (Δf4), and a second time range (ΔT2) of the filtered reception signal being outputted from the filter (11a) by attenuating signal components having a frequency outside of a second bandwidth (Δf3), and
output the filtered reception signal for display or storage.

2. The frequency steered sonar (1) of claim 1, wherein the first bandwidth (Δf4) is wider than the second bandwidth (Δf3) and the first time range (ΔT1) is earlier than the second time range (ΔT2).

3. The frequency steered sonar (1) of claim 1 or claim 2, wherein the filter (11a) is configured to:
convert (21) the reception signal into the frequency domain as a frequency converted signal,
extract (22-1) the first bandwidth (Δf4) from the frequency converted signal as a first extracted signal,
extract (22-1) the second bandwidth (Δf3) from the frequency converted signal as a second extracted signal,
convert (23-1) the first extracted signal and the second extracted signal into the time domain as a first time converted signal and a second time converted signal respectively,
generate (24-1) the first time range (ΔT1) of the filtered reception signal by extracting the first time range (ΔT1) of the first time converted signal, and
generate (24-1) the second time range (ΔT2) of the filtered reception signal by extracting the second time range (ΔT2) of the second time converted signal.

4. The frequency steered sonar (1) of claim 1 or claim 2, wherein the filter (11a) is configured to:
filter the reception signal with a first bandpass filter (BP1) having a bandwidth set to the first bandwidth (Δf4) and output a first bandpass filtered signal,
filter the reception signal with a second bandpass filter (BP2) having a bandwidth set to the second bandwidth (Δf3) and output a second bandpass filtered signal,
generate (32-1) the first time range (ΔT1) of the filtered reception signal by extracting the first time range (ΔT1) of the first bandpass filtered signal, and
generate (32-1) the second time range (ΔT2) of the filtered reception signal by extracting the second time range (ΔT2) of the second bandpass filtered signal.

5. The frequency steered sonar (1) of any of the preceding claims, wherein the filter (11a) is configured to concatenate the first time range (ΔT1) of the filtered reception signal and the second time range (ΔT2) of the filtered reception signal.

6. The frequency steered sonar (1) of claim 5, wherein the filter (11a) is configured to smooth the filtered reception signal at a concatenation point between the first time range (ΔT1) and the second time range (ΔT2).

7. The frequency steered sonar (1) of any of the preceding claims, wherein the filter (11a) is configured to filter the reception signal centered on a first frequency associated with a first transmission direction and filter the reception signal centered on a second frequency associated with a second transmission direction, the first frequency and the second frequency being within the plurality of frequencies (f1-fm) transmitted by the transducer (10).

8. A control method for a frequency steered sonar, the method comprising:
transmitting underwater with a transducer (10) an ultrasonic transmission wave comprising a plurality of frequencies (f1-fm), each frequency of the plurality of frequencies being associated with a transmission direction (Dk),
filtering a reception signal generated from the transducer receiving a reflection wave from the transmission wave reflected on an underwater object, and
outputting the filtered reception signal for display or storage, wherein
the filtering comprises:
filtering the reception signal in each transmission direction, so that signal components having a frequency outside of a first bandwidth (Δf4) are attenuated in a first time range (ΔT1) of the filtered reception signal and signal components having a frequency outside of a second bandwidth (Δf3) are attenuated in a second time range (ΔT2) of the filtered reception signal.

9. The method of claim 8, wherein the first bandwidth (Δf4) is wider than the second bandwidth (Δf3) and the first time range (ΔT1) is earlier than the second time range (ΔT2).

10. The method of claim 8 or 9, comprising:
filtering the reception signal to produce a first bandpass filtered signal having a bandwidth set to the first bandwidth (Δf4),
filtering the reception signal to produce a second bandpass filtered signal having a bandwidth set to the second bandwidth (Δf3),
generating (32-1) the first time range (ΔT1) of the filtered reception signal by extracting the first time range (ΔT1) of the first bandpass filtered signal, and
generating (32-1) the second time range (ΔT2) of the filtered reception signal by extracting the second time range (ΔT2) of the second bandpass filtered signal.

11. The method of any of claim 8 to 10, further comprising concatenating the first time range (ΔT1) of the filtered reception signal and the second time range (ΔT2) of the filtered reception signal.

12. The method of claim 11, further comprising smoothing the filtered reception signal at a concatenation point between the first time range (ΔT1) and the second time range (ΔT2).

13. The method of any of claims 8 to 12, further comprising filtering the reception signal centered on a first frequency associated with a first transmission direction and filtering the reception signal centered on a second frequency associated with a second transmission direction, the first frequency and the second frequency being within the plurality of frequencies (f1-fm) transmitted by the transducer (10).

14. A computer program comprising instructions which, when the program is executed by a computer, cause the computer to carry out the method of any of claims 8 to 13.
